# FASCICULE DE BREVET EUROPEEN

(11) **EP 3 462 603 B1**
(45) Date de publication et mention de la délivrance du brevet: **19.03.2025**
(21) Numéro de dépôt: 18191606.5
(22) Date de dépôt: 30.08.2018
(51) Int. Cl.: H02P 29/50, H02M 5/458

(54) **PROCÉDÉ DE COMMANDE POUR VÉRIFIER LA COMPATIBILITÉ ENTRE UN VARIATEUR DE VITESSE ET LE FILTRE D'ENTRÉE**
STEUERUNGSVERFAHREN ZUR ÜBERPRÜFUNG DER KOMPATIBILITÄT ZWISCHEN EINEM DREHZAHLREGLER UND DEM EINGANGSFILTER
CONTROL METHOD FOR VERIFYING COMPATIBILITY BETWEEN A SPEED VARIATOR AND INPUT FILTER

(30) Priorité: 28.09.2017 FR 1771025
(43) Date de publication de la demande: 03.04.2019
(73) Titulaire: Schneider Toshiba Inverter Europe SAS, 27120 Pacy sur Eure (FR)
(72) Inventeur: MALRAIT, François, 27120 Jouy sur Eure (FR); MESSAOUDI, Mehdi, 27200 Vernon (FR)
(74) Mandataire: Plasseraud IP

(56) Documents cités:
- US-A- 5 089 760
- US-A1- 2012 256 580
- US-B1- 6 229 278
- BEHROOZ BAHRANI ET AL: "Investigation of harmonic filtering for the state-of-the-art variable speed drives", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1 - 10, XP031541692, ISBN: 978-1-4244-4432-8
- KOLAR J W ET AL: "A COMPREHENSIVE DESIGN APPROACH FOR A THREE-PHASE HIGH-FREQUENCY SINGLE-SWITCH DISCONTINUOUS-MODE BOOST POWER FACTOR CORRECTOR BASEDON ANALYTICALLY DERIVED NORMALIZED CONVERTER COMPONENT RATINGS", IEEE TRANSACTIONS ON INDUSTRY APPLICATIONS, IEEE SERVICE CENTER, PISCATAWAY, NJ, US, vol. 31, no. 3, 1 May 1995 (1995-05-01), pages 569 - 582, XP000537476, ISSN: 0093-9994, DOI: 10.1109/28.382118

## Description

### Domaine technique de l'invention

La présente invention se rapporte à un procédé de commande, mis en œuvre pour vérifier la compatibilité entre un filtre d'entrée et un variateur de vitesse.

L'invention concerne également un système de commande configuré pour mettre en œuvre ledit procédé.

### Etat de la technique

De manière connue, la commande d'un moteur électrique peut être réalisée à l'aide d'un variateur de vitesse. Le variateur de vitesse est connecté au réseau électrique et est commandé par une unité de commande pour fournir une tension variable au moteur électrique. Pour assurer un filtrage des harmoniques en provenance du réseau électrique, un filtre d'entrée est intercalé entre le variateur de vitesse et le réseau. Ce filtre peut se présenter sous différentes formes et fonctionner selon différents principes. Il pourra s'agir par exemple d'un filtre anti-harmoniques ou d'un filtre compensateur d'harmoniques.

Il a été observé que la présence d'un tel filtre d'entrée peut entraîner des instabilités au niveau du bus continu du variateur de vitesse qui lui est connecté. Ces instabilités conduisent à un vieillissement prématuré des condensateurs du bus continu du variateur de vitesse et de ce fait à des défaillances du variateur de vitesse.

Une solution de démarrage rapide d'un moteur électrique a été proposée dans la demande de brevet US2012/256580A1 et une solution de contrôle de la tension présente sur le bus continu d'un variateur de vitesse a été proposée dans le brevet US6229278B1**.** Cependant, ces solutions ne sont pas transposables à la détermination de la compatibilité entre un filtre d'entrée et un variateur de vitesse. La simple mesure de la tension sur le bus et sa comparaison avec une valeur seuil ne correspond pas à un état d'instabilité du système et n'est pas suffisante pour décider sur la compatibilité ou l'incompatibilité du filtre d'entrée avec le variateur.

Le but de l'invention est donc de proposer une solution simple et fiable qui permette de s'assurer que le filtre d'entrée est bien compatible avec le variateur de vitesse qui est employé pour commander le moteur électrique et éventuellement de déterminer sur quelle plage de fonctionnement le moteur électrique peut être commandé.

### Exposé de l'invention

Ce but est atteint par un procédé divulgué dans la revendication 1 jointe.

L'invention concerne également un système de commande divulgué dans la revendication indépendante 8 jointe.

### Brève description des figures

D'autres caractéristiques et avantages vont apparaître dans la description détaillée qui suit, faite en regard des dessins annexés dans lesquels :
- La figure 1 représente de manière schématique une architecture de commande d'un moteur électrique ;
- La figure 2 représente un exemple de filtre d'entrée pouvant être connecté à l'entrée d'un variateur de vitesse ;
- Les figures 3A à 3C illustrent de manière schématique le principe du procédé de commande de l'invention, selon un premier mode de réalisation ;
- La figure 4 illustre de manière schématique le principe du procédé de commande de l'invention, selon un deuxième mode de réalisation.

### Description détaillée d'au moins un mode de réalisation

Comme décrit ci-dessus, l'invention vise à permettre de vérifier la compatibilité entre un variateur de vitesse et le filtre connecté à son entrée. Il permet également de connaître quelle est la plage de fonctionnement sur laquelle le variateur de vitesse 2 et le filtre d'entrée 1 sont compatibles entre eux.

De manière non limitative, un variateur de vitesse 2 comporte classiquement :
- Un étage redresseur 20 connecté à une source d'alimentation électrique (le réseau électrique R) pour recevoir une tension alternative ; Le redresseur pourra être de type passif tel qu'un pont de diodes ou actif à base de transistors commandés ;
- Un bus continu d'alimentation 22 sur lequel est appliqué la tension Vdc redressée par l'étage redresseur 20 et comprenant notamment deux lignes de bus et au moins un condensateur de bus connecté entre les deux lignes pour stabiliser la tension continue Vdc du bus ;
- Un étage onduleur 21 connecté en sortie du bus continu 22 et destiné à découper la tension continue Vdc fournie par le bus en une tension variable à destination du moteur électrique M ; L'étage onduleur 21 comporte plusieurs bras de commutation comportant chacun des transistors de puissance commandés pour appliquer la tension variable au moteur électrique.

Le variateur de vitesse intègre avantageusement une unité de commande UC destinée à assurer la commande des transistors de l'étage onduleur 21. L'unité de commande UC s'appuie sur une loi de commande pour déterminer les tensions à appliquer au moteur électrique M ; la loi de commande peut être notamment de type vectoriel ou scalaire.

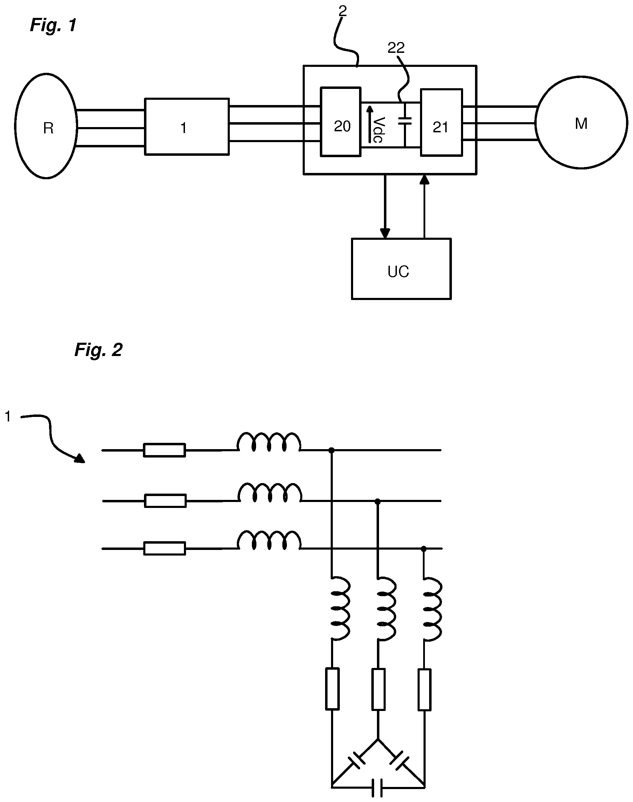

Le variateur de vitesse 2 comporte plusieurs phases de sortie (en général trois phases) reliant chaque bras de l'étage onduleur 21 à un enroulement distinct d'un moteur électrique M et plusieurs phases d'entrée (trois phases d'entrée sur la figure 1) le reliant à la source d'alimentation électrique, en général le réseau électrique R.

Pour filtrer les harmoniques, un filtre d'entrée 1 est connecté aux phases d'entrée du variateur de vitesse 2 et est intercalé entre le réseau R et le variateur de vitesse 2.

Ce filtre d'entrée 1 peut par exemple prendre la configuration représentée sur la figure 2. De manière connue, il se compose de plusieurs circuits de type RLC connectés de manière appropriée sur chacune des phases d'entrée du variateur de vitesse.

Le procédé de commande décrit ci-dessous s'applique quel que soit le filtre 1 présent en entrée et quel que soit le type de moteur électrique M (synchrone, asynchrone...) connecté sur la sortie du variateur de vitesse.

Le procédé de commande de l'invention est mis en œuvre selon deux modes de réalisation possibles.

Il est mis en œuvre par un système de commande comprenant des moyens de commande et des moyens de mesure de la tension continue Vdc du bus du variateur de vitesse.

Les moyens de commande sont configurés pour exécuter un ou plusieurs modules logiciels destinés à mettre en œuvre une ou plusieurs des étapes du procédé.

Les moyens de commande chargés de l'exécution des étapes de commande sont par exemple intégrés à l'unité de commande UC du variateur de vitesse 2.

Le procédé de commande peut être exécuté à la première mise sous tension du variateur de vitesse 2 ou à tout autre moment, par exemple lors d'un remplacement du filtre d'entrée.

De manière générale, le procédé consiste à balayer plusieurs points de fonctionnement du moteur électrique M grâce au variateur de vitesse 2 et à mesurer la tension continue Vdc du bus 22 du variateur de vitesse pour chacun de ces points de fonctionnement. Il s'agira ensuite de comparer la variation maximale Δ*V_{dc_m}* de l'amplitude de la tension continue mesurée avec une valeur seuil Δ*V_{dc_ref}.*

Par "variation", nous entendons l'amplitude des oscillations de la tension continue Vdc du bus c'est-à-dire la tension Vdc (fondamentale) + les variations DV * sin(2 πft), et non la variation normale du terme Vdc (fondamentale).

Dans la présente demande, la notion de point de fonctionnement doit être comprise au niveau électrique (tension, courant) ou au niveau mécanique (couple, vitesse, position). Autrement dit, au niveau électrique, le variateur de vitesse fournit une tension (définie par une amplitude et une phase - fréquence statorique ou appelée fréquence moteur). Au niveau mécanique, le contrôle du variateur de vitesse traduit une référence de couple et de vitesse en une tension, qui, appliquée au moteur électrique, permet de générer un couple mécanique au moteur électrique.

Un point de fonctionnement doit être parfaitement définie et stable, que ce soit par les grandeurs électriques ou par les grandeurs mécaniques.

La valeur seuil Δ*V_{dc_ref}* sera définie en fonction des données constructeurs définies pour la protection des composants du variateur de vitesse.

Grâce au principe de l'invention, il est possible de déterminer sur quelle plage de commande le variateur de vitesse peut être commandé sans entraîner d'instabilités.

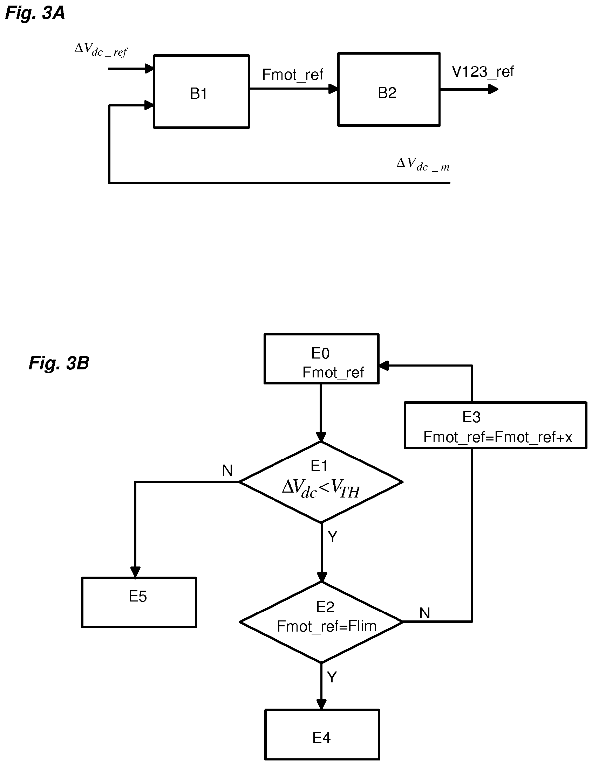

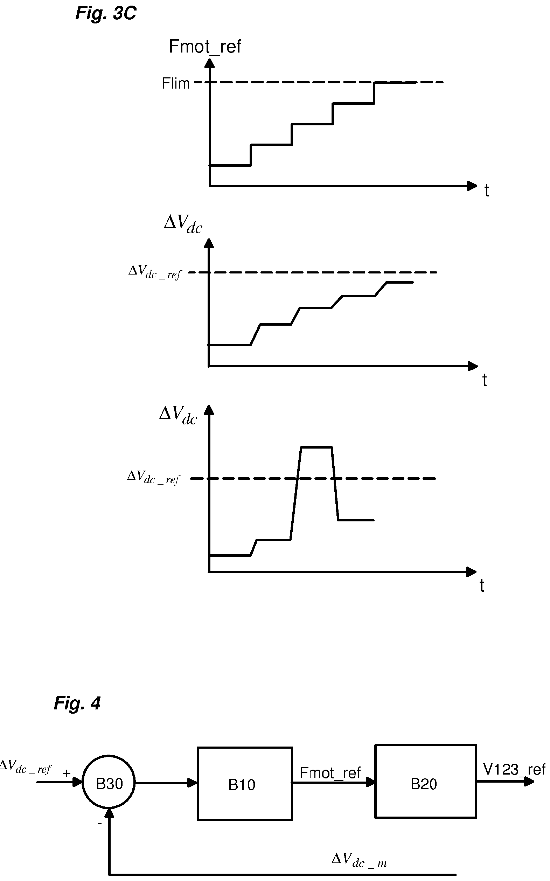

En référence aux figures 3 et 4, deux approches sont possibles.

Dans la première approche, il s'agit de parcourir les points de fonctionnement du moteur électrique et de vérifier la compatibilité de l'association filtre d'entrée + variateur de vitesse pour chacun de ces points de fonctionnement.

Dans la deuxième approche, il s'agit de déterminer les limites de validité en termes de point de fonctionnement de l'association filtre d'entrée + variateur de vitesse.

### Première approche

Dans la première approche, le principe du procédé de commande mis en oeuvre est schématisé sur la figure 3A.

La structure de commande comporte :
- Un bloc de commande B1 chargé de générer une trajectoire de référence à la fréquence moteur (Fmot_ref). Ce bloc de commande B1 reçoit en entrée la variation maximale Δ*V_{dc_m}* de l'amplitude de la tension continue mesurée et une valeur seuil Δ*V_{dc_ref}* définie comme la valeur limite pour laquelle l'association filtre d'entrée + variateur de vitesse n'est plus valable.
- Un bloc de contrôle standard B2 recevant en entrée la fréquence moteur de référence Fmot_ref générée par le bloc de commande B1 suivant la trajectoire suivie. Ce bloc de contrôle standard B2 applique une loi de contrôle standard pour déterminer les tensions de commande V123_ref à appliquer au moteur électrique connecté sur les phases de sortie du variateur de vitesse.

Le bloc de commande B1 fonctionne selon l'algorithme représenté sur la figure 3B. Cet algorithme est le suivant :
a) Dans une étape E0, il génère une première fréquence moteur de référence Fmot_ref selon la trajectoire prévue, cette fréquence moteur de référence correspondant à un premier point de fonctionnement du moteur électrique.
b) Dans une étape suivante, les moyens de mesure mesurent la tension continue Vdc du bus du variateur de vitesse pour ce premier point de fonctionnement.
c) Dans une étape E1, un module de comparaison compare la variation maximale Δ*V_{dc_m}* de l'amplitude de la tension continue mesurée du bus avec la valeur seuil Δ*V_{dc_ref}* déterminée.
d) Dans une étape E2, si la variation maximale Δ*V_{dc_m}* mesurée est inférieure à ladite valeur seuil Δ*V_{dc_ref},* le bloc de commande B1 vérifie alors à l'aide d'un module de vérification si la limite haute Flim de fréquence moteur de la trajectoire est atteinte.
e) Si la limite haute Flim n'est pas encore atteinte, le bloc de commande B1 recommence les étapes a) à d) en modifiant la fréquence moteur de référence (Fmot_ref+x) appliquée en entrée selon la trajectoire de commande suivie (étape E3).
f) Si la limite haute Flim est atteinte, le bloc de commande B1 peut en conclure que l'association filtre d'entrée+variateur de vitesse est valide sur l'ensemble de la plage de fonctionnement (étape E4).
g) Si la variation maximale Δ*V_{dc_m}* mesurée est supérieure à ladite valeur seuil Δ*V_{dc_ref},* le bloc de commande B1 en conclut que l'association filtre d'entrée + variateur de vitesse n'est pas conseillée pour un fonctionnement à cette fréquence moteur (étape E5).

Comme la trajectoire générée en entrée est une trajectoire croissante (ou décroissante), le bloc de commande est à même de déterminer à l'aide d'un module approprié à partir de quelle fréquence moteur l'association filtre d'entrée + variateur de vitesse n'est plus conseillée, ou autrement dit de déterminer la limite haute (respectivement basse) de fonctionnement du couple filtre d'entrée + variateur de vitesse.

La trajectoire suivie par la fréquence moteur de référence Fmot_ref peut comporter une limite haute Flim pour laquelle il est considéré que toute la plage de fonctionnement du moteur électrique est couverte. Lorsque cette limite haute Flim est atteinte et que l'étape d) est vérifiée, le bloc de commande B1 peut en conclure que toute la plage de fonctionnement est couverte et que l'association filtre d'entrée + variateur de vitesse est valable de manière globale.

La trajectoire de la fréquence moteur de référence Fmot_ref peut suivre tout profil déterminé, à partir du moment où plusieurs points de fonctionnement successifs sont définis au niveau du moteur électrique M. Il pourra s'agir par exemple d'une trajectoire comportant plusieurs paliers de fréquence successifs, d'une trajectoire qui suit une rampe déterminée ou de toute autre trajectoire possible permettant de couvrir la plage de fonctionnement.

La figure 3C représente sur le premier diagramme un exemple de trajectoire par paliers successifs suivi par la fréquence moteur de référence Fmot_ref.

Sur cette figure 3C, le deuxième diagramme montre l'évolution de la variation maximale Δ*V_{dc_m}* de l'amplitude de la tension continue du bus pour chaque palier de fréquence de référence Fmot_ref appliqué en entrée. Sur ce diagramme, la variation maximale Δ*V_{dc_m}* reste toujours inférieure à la valeur seuil Δ*V_{dc_ref},* ce qui permet au bloc de commande B1 de conclure à la compatibilité du filtre d'entrée 1 avec le variateur de vitesse 2.

Sur la figure 3C, le troisième diagramme montre l'évolution de la variation maximale Δ*V_{dc_m}* de l'amplitude de la tension continue du bus pour chaque palier de fréquence de référence Fmot_ref appliqué en entrée. Sur ce troisième diagramme, on peut voir que la variation maximale Δ*V_{dc_m}* dépasse la valeur seuil Δ*V_{dc_ref}* pour un point de fonctionnement. Il en résulte que l'association filtre d'entrée+variateur de vitesse n'est pas valable sur toute la plage de fonctionnement.

A la fin de la mise en œuvre de l'algorithme, l'unité de commande UC est à même de définir la plage de fonctionnement pour laquelle l'association filtre d'entrée + variateur de vitesse est valable.

### Deuxième approche

Selon cette deuxième approche, le procédé de commande consiste en une boucle de régulation permettant de déterminer directement la limite basse en termes de fréquence moteur (ou autrement dit de point de fonctionnement) de la compatibilité de l'association filtre d'entrée + variateur de vitesse et la limite haute en termes de fréquence moteur de la compatibilité de l'association filtre d'entrée + variateur de vitesse.

En référence à la figure 4, pour cette deuxième approche, la structure de commande comporte :
- Un bloc de comparaison B30 permettant de déterminer la différence entre la variation maximale Δ*V_{dc_m}* de l'amplitude de la tension continue du bus qui a été mesurée et la valeur seuil Δ*V_{dc_ref}.*
- Un bloc de régulation B10 recevant en entrée ladite différence déterminée et exécutant un contrôleur classique. A partir de la différence injectée en entrée, le bloc de régulation B10 détermine la fréquence moteur de référence Fmot_ref à appliquer pour faire converger la variation maximale Δ*V_{dc_m}* de l'amplitude de la tension continue mesurée vers la valeur seuil Δ*V_{dc_ref}.*
- Un bloc de contrôle standard B20 recevant en entrée la fréquence moteur de référence Fmot_ref déterminée par le bloc de régulation B10. Ce bloc de contrôle standard B20 applique une loi de contrôle standard pour déterminer les tensions de commande V123_ref à appliquer au moteur électrique M connecté sur les phases de sortie du variateur de vitesse 2 à partir de la fréquence moteur de référence Fmot_ref reçue en entrée.

Pour déterminer la limite basse de la zone d'instabilité, si la variation maximale Δ*V_{dc_m}* de la tension continue du bus est inférieure à la valeur seuil Δ*V*_{*dc*_*ref*}, alors le bloc de régulation B10 va augmenter la fréquence moteur de référence Fmot_ref, en partant d'une valeur initiale faible (à partir de 0Hz par exemple). Cela peut se réaliser par différents contrôleurs standards, tels que contrôleur de type tout ou rien ou de type régulateur à action proportionnelle intégrale (PI). A titre d'exemple :
o Pour un régulateur de type PI, à chaque pas de temps, on a :
   Fint = Fint + Kl×Ts (Δ*V_{dc_ref} -* Δ*V_{dc_m}*) et Fmot_ref = Fint + KP (Δ*V_{dc_ref} -* Δ*V_{dc_m}*). Avec Fint : terme intégral, Ts : temps d'échantillonnage, KI gain intégral, KP gain proportionnel.

Pour déterminer la limite haute de la zone d'instabilité, si la variation maximale Δ*V_{dc_m}* de la tension continue du bus est inférieure à la valeur seuil Δ*V_{dc_ref}*, alors le bloc de régulation B10 va diminuer la fréquence moteur de référence Fmot_ref, en partant d'une valeur initiale élevée (à partir de la fréquence nominale par exemple). Cela peut également se réaliser par différents contrôleurs standards, tels que contrôleur de type tout ou rien ou de type régulateur à action proportionnelle intégrale (PI). A titre d'exemple :
o Pour un régulateur de type PI, à chaque pas de temps, on a :
   Fint = Fint - Kl×Ts (Δ*V_{dc_ref} -* Δ*V_{dc_m}*) et Fmot_ref = Fint - KP (Δ*V_{dc_ref} -* Δ*V_{dc_m}*). Avec Fint : terme intégral, Ts : temps d'échantillonnage, KI gain intégral, KP gain proportionnel.

Dans cette deuxième approche, la fréquence moteur de référence Fmot_ref est modifiée par le bloc de régulation B20. Il n'existe pas de limitation à ce que ce bloc B20 fournisse une variation continue de fréquence moteur ou une variation discontinue par paliers successifs.

Cette deuxième approche permet donc de vérifier que la limite basse de fréquence moteur déterminée et que la limite haute de fréquence moteur déterminée définissent bien la plage de fonctionnement voulue pour le variateur de vitesse dans le contrôle du moteur électrique.

L'invention décrite ci-dessus présente ainsi un certain nombre d'avantages, parmi lesquels :
- Une simplicité de mise en œuvre. Il s'agit simplement de mesurer la tension continue du bus et de mettre en œuvre l'algorithme adapté selon la première approche ou la deuxième approche ;
- Une fiabilité permettant de garantir que l'association filtre d'entrée + variateur de vitesse est bien réalisable sur une plage de fonctionnement suffisamment large ;
- Une solution économique en ce qu'elle permet d'éviter d'endommager les composants du variateur de vitesse.

## Revendications

1. Procédé de commande pour vérifier la compatibilité entre un filtre d'entrée (1) de type RLC pour filtrage d'harmoniques en provenance d'un réseau électrique et un variateur de vitesse (2), ledit variateur de vitesse (2) étant connecté à une source d'alimentation électrique via ledit filtre d'entrée (1), ledit variateur de vitesse comprenant en entrée un étage redresseur (20) connecté audit filtre d'entrée (1), un bus continu d'alimentation (22) connecté audit étage redresseur et recevant une tension continue d'alimentation (Vdc), et en sortie un étage onduleur (21) connecté au bus continu d'alimentation et commandé pour fournir une tension variable à un moteur électrique (M), ledit procédé étant **caractérisé en ce qu'**il consiste à :
- Appliquer plusieurs commandes successives pour définir plusieurs points de fonctionnement du moteur électrique,
- Pour chaque point de fonctionnement :
- Mesurer la tension continue du bus,
- Comparer la variation maximale (Δ*V_{dc_m}*) de l'amplitude de la tension continue mesurée pour ledit point de fonctionnement avec une valeur seuil (Δ*V_{dc_ref}*),
- Définir un nouveau point de fonctionnement tant que ladite variation maximale de l'amplitude de la tension continue est inférieure à ladite valeur seuil,
- Déterminer une plage de fonctionnement comprenant tous les points de fonctionnement pour lesquels ladite variation maximale de l'amplitude la tension continue est inférieure à ladite valeur seuil.

2. Procédé selon la revendication 1, **caractérisé en ce qu'**il comporte une étape de mise en œuvre d'une trajectoire de commande permettant de définir lesdits points de fonctionnement.

3. Procédé selon la revendication 2, **caractérisé en ce que** ladite trajectoire de commande suit des paliers successifs, chaque palier permettant de définir un point de fonctionnement distinct.

4. Procédé selon la revendication 2 ou 3, **caractérisé en ce que** ladite trajectoire de commande est une trajectoire de fréquence moteur de référence (Fmot_ref).

5. Procédé selon la revendication 1, **caractérisé en ce qu'**il comporte une étape de définition d'un nouveau point de fonctionnement à partir d'une différence entre la variation maximale (Δ*V_{dc_m}*) de l'amplitude de la tension continue mesurée pour ledit point de fonctionnement et la valeur seuil (Δ*V_{dc_ref}*)-

6. Procédé selon la revendication 5, **caractérisé en ce qu'**il comporte une étape de détermination d'une limite haute en termes de point de fonctionnement d'une compatibilité de l'association du filtre d'entrée (1) avec le variateur de vitesse (2).

7. Procédé selon la revendication 5 ou 6, **caractérisé en ce qu'**il comporte une étape de détermination d'une limite basse en termes de point de fonctionnement d'une compatibilité de l'association du filtre d'entrée avec le variateur de vitesse.

8. Système de commande pour vérifier la compatibilité entre un filtre d'entrée (1) de type RLC pour filtrage d'harmoniques en provenance d'un réseau électrique et un variateur de vitesse (2), ledit variateur de vitesse (2) étant connecté à une source d'alimentation électrique via ledit filtre d'entrée (1), ledit variateur de vitesse comprenant en entrée un étage redresseur (20) connecté audit filtre d'entrée (1), un bus continu d'alimentation (22) connecté audit étage redresseur et recevant une tension continue d'alimentation (Vdc), et en sortie un étage onduleur (21) connecté au bus continu d'alimentation et commandé pour fournir une tension variable à un moteur électrique (M), ledit système étant **caractérisé en ce qu'**il est configuré pour appliquer plusieurs commandes successives pour définir plusieurs points de fonctionnement du moteur électrique et **en ce qu'**il comporte :
- Pour chaque point de fonctionnement :
- Des moyens de mesure de la tension continue du bus,
- Un module de comparaison de la variation maximale (Δ*V_{dc_m}*) de l'amplitude de la tension continue mesurée pour ledit point de fonctionnement avec une valeur seuil (Δ*V_{dc_ref}*)*,*
- Un module de détermination d'un nouveau point de fonctionnement tant que ladite variation maximale de l'amplitude de la tension continue est inférieure à ladite valeur seuil,
- Un module de détermination d'une plage de fonctionnement comprenant tous les points de fonctionnement pour lesquels ladite variation maximale (Δ*V_{dc_m}*) de l'amplitude la tension continue est inférieure à ladite valeur seuil (Δ*V_{dc_ref}*).

9. Système selon la revendication 8, **caractérisé en ce qu'**il comporte un module d'application d'une trajectoire de commande permettant de définir lesdits points de fonctionnement.

10. Système selon la revendication 9, **caractérisé en ce que** ladite trajectoire de commande suit des paliers successifs, chaque palier permettant de définir un point de fonctionnement distinct.

11. Système selon la revendication 9 ou 10, **caractérisé en ce que** ladite trajectoire de commande est une trajectoire de fréquence moteur de référence (Fmot_ref).

12. Système selon la revendication 8, **caractérisé en ce qu'**il comporte un module de détermination (B10) d'un nouveau point de fonctionnement à partir d'une différence entre la variation maximale (Δ*V_{dc_m}*) de l'amplitude de la tension continue mesurée pour ledit point de fonctionnement et la valeur seuil (Δ*V_{dc_ref}*).

13. Système selon la revendication 12, **caractérisé en ce qu'**il comporte un module de détermination d'une limite haute en termes de point de fonctionnement d'une compatibilité de l'association du filtre d'entrée (1) avec le variateur de vitesse (2).

14. Système selon la revendication 12 ou 13, **caractérisé en ce qu'**il comporte un module de détermination d'une limite basse en termes de point de fonctionnement d'une compatibilité de l'association du filtre d'entrée (1) avec le variateur de vitesse (2).

## Patentansprüche

1. Steuerungsverfahren zum Verifizieren der Kompatibilität zwischen einem Eingangsfilter (1) vom RLC-Typ zum Filtern von Harmonischen aus einem Stromnetz und einem Geschwindigkeitswandler (2), wobei der Geschwindigkeitswandler (2) mit einer elektrischen Versorgungsquelle über den Eingangsfilter (1) verbunden ist, wobei der Geschwindigkeitswandler am Eingang eine Gleichrichterstufe (20), welche mit dem Eingangsfilter (1) verbunden ist, einen Gleichspannung-Versorgungsbus (22), welcher mit der Gleichrichterstufe verbunden ist und eine Versorgungs-Gleichspannung (Vdc) erhält, und am Ausgang eine Wechselrichterstufe (21) umfasst, welche mit dem Gleichspannung-Versorgungsbus verbunden ist und dazu gesteuert wird, eine variable Spannung zu einem Elektromotor (M) zu liefern, wobei das Verfahren **dadurch gekennzeichnet ist, dass** es besteht aus:
- Anwenden mehrerer aufeinander folgender Anweisungen, um mehrere Arbeitspunkte des Elektromotors zu definieren,
- für jeden Arbeitspunkt:
o Messen der Gleichspannung des Busses,
o Vergleichen der maximalen Variation (Δ*V_{dc_m}*) der Amplitude der Gleichspannung, welche für den Arbeitspunkt gemessen wird, mit einem Schwellenwert (Δ*V_{dc_ref}*),
o Definieren eines neuen Arbeitspunkts, solange die maximale Variation der Amplitude der Gleichspannung kleiner als der Schwellenwert ist,
- Bestimmen eines Arbeitsbereichs, welcher alle der Arbeitspunkte umfasst, für welche die maximale Variation der Amplitude der Gleichspannung kleiner als der Schwellenwert ist.

2. Verfahren nach Anspruch 1,
**dadurch gekennzeichnet, dass** es einen Schritt eines Erstellens einer Anweisungsbahnkurve umfasst, welche es erlaubt, die Arbeitspunkte zu definieren.

3. Verfahren nach Anspruch 2,
**dadurch gekennzeichnet, dass** die Anweisungsbahnkurve aufeinanderfolgenden Treppenstufen folgt, wobei jede Treppenstufe es erlaubt, einen bestimmten Arbeitspunkt zu definieren.

4. Verfahren nach Anspruch 2 oder 3, **dadurch gekennzeichnet, dass** die Anweisungsbahnkurve eine Referenz-Motorfrequenz-Bahnkurve (Fmot_ref) ist.

5. Verfahren nach Anspruch 1, **dadurch gekennzeichnet, dass** es einen Schritt einer Definition eines neuen Arbeitspunkts ausgehend von einer Differenz zwischen der maximalen Variation (Δ*V_{dc_m})* der gemessenen Amplitude der Gleichspannung für den Arbeitspunkt und dem Schwellenwert (Δ*V_{dc_ref}*) umfasst.

6. Verfahren nach Anspruch 5, **dadurch gekennzeichnet, dass** es einen Schritt eines Bestimmens einer oberen Grenze bezüglich eines Arbeitspunkts einer Kompatibilität der Zuordnung des Eingangsfilters (1) mit dem Geschwindigkeitswandler (2) umfasst.

7. Verfahren nach Anspruch 5 oder 6, **dadurch gekennzeichnet, dass** es einen Schritt eines Bestimmens einer unteren Grenze bezüglich eines Arbeitspunkts einer Kompatibilität der Zuordnung des Eingangsfilters mit dem Geschwindigkeitswandler umfasst.

8. Steuersystem zum Verifizieren der Kompatibilität zwischen einem Eingangsfilter (1) vom RLC-Typ zum Filtern von Harmonischen aus einem Stromnetz und einem Geschwindigkeitswandler (2), wobei der Geschwindigkeitswandler (2) mit einer elektrischen Versorgungsquelle über den Eingangsfilter (1) verbunden ist, wobei der Geschwindigkeitswandler am Eingang eine Gleichrichterstufe (20), welche mit dem Eingangsfilter (1) verbunden ist, einen Gleichspannung-Versorgungsbus (22), welcher mit der Gleichrichterstufe verbunden ist und eine Versorgungs-Gleichspannung (Vdc) erhält, und am Ausgang eine Wechselrichterstufe (21) umfasst, welche mit dem Gleichspannung-Versorgungsbus verbunden ist und dazu gesteuert ist, eine variable Spannung zu einem Elektromotor (M) zu liefern, wobei das System **dadurch gekennzeichnet ist, dass** es dazu eingerichtet ist, mehrere aufeinanderfolgende Anweisungen anzuwenden, um mehrere Arbeitspunkte des Elektromotors zu definieren, und dass es umfasst:
- für jeden Arbeitspunkt:
o Mittel zum Messen der Gleichspannung des Busses,
o ein Modul zum Vergleichen der maximalen Variation (Δ*V_{dc_m}*) der Amplitude der Gleichspannung, welche für den Arbeitspunkt gemessen wird, mit einem Schwellenwert (Δ*V_{dc_ref}*),
o ein Modul zum Bestimmen eines neuen Arbeitspunkts, solange die maximale Variation der Amplitude der Gleichspannung kleiner als der Schwellenwert ist,
- ein Modul zum Bestimmen eines Arbeitsbereichs, welcher alle der Arbeitspunkte umfasst, für welche die maximale Variation (Δ*V_{dc_m}*) der Amplitude der Gleichspannung kleiner als der Schwellenwert (Δ*V_{dc_ref}*) ist.

9. System nach Anspruch 8, **dadurch gekennzeichnet, dass** es ein Modul zum Anwenden einer Anweisungsbahnkurve umfasst, welche es erlaubt, die Arbeitspunkte zu definieren.

10. System nach Anspruch 9, **dadurch gekennzeichnet, dass** die Anweisungsbahnkurve aufeinanderfolgenden Treppenstufen folgt, wobei jede Treppenstufe es erlaubt, einen bestimmten Arbeitspunkt zu definieren.

11. System nach Anspruch 9 oder 10, **dadurch gekennzeichnet, dass** die Anweisungsbahnkurve eine Referenz-Motorfrequenz-Bahnkurve (Fmot_ref) ist.

12. System nach Anspruch 8, **dadurch gekennzeichnet, dass** es ein Modul zum Bestimmen (B10) eines neuen Arbeitspunkts ausgehend von einer Differenz zwischen der maximalen Variation (Δ*V_{dc_m}*) der gemessenen Amplitude der Gleichspannung für den Arbeitspunkt und dem Schwellenwert (Δ*V_{dc_ref}*) umfasst.

13. System nach Anspruch 12, **dadurch gekennzeichnet, dass** es ein Modul zum Bestimmen einer oberen Grenze bezüglich eines Arbeitspunkts einer Kompatibilität der Zuordnung des Eingangsfilters (1) mit dem Geschwindigkeitswandler (2) umfasst.

14. System nach Anspruch 12 oder 13, **dadurch gekennzeichnet, dass** es ein Modul zum Bestimmen einer unteren Grenze bezüglich eines Arbeitspunkts einer Kompatibilität der Zuordnung des Eingangsfilters (1) mit dem Geschwindigkeitswandler (2) umfasst.

## Claims

1. A control method for verifying compatibility between an input filter (1) of the RLC type for filtering harmonics from an electric network and a variable speed drive (2), said variable speed drive (2) being connected to an electric power source via said input filter (1), said variable speed drive comprising as an input a rectifier stage (20) connected to said input filter (1), a DC power supply bus (22) connected to said rectifier stage and receiving a DC power supply voltage (Vdc), and as an output an inverter stage (21) connected to the DC power supply bus and controlled to provide a variable voltage to an electric motor (M), said method being **characterised in that** it consists in:
- Applying several successive commands to define several operating points of the electric motor,
- For each operating point:
Measuring the bus DC voltage,
Comparing the maximum variation (Δ*V_{dc_m}*) of the amplitude of the DC voltage measured for said operating point with a threshold value (Δ*V_{dc_ref}*),
Defining a new operating point as long as said maximum variation of the amplitude of the DC voltage is less than said threshold value,
- Determining an operating range comprising all operating points for which said maximum variation of the amplitude of the DC voltage is less than said threshold value.

2. The method according to claim 1, **characterised in that** it includes a step of implementing a control trajectory for defining said operating points.

3. The method according to claim 2, **characterised in that** said control trajectory follows successive levels, wherein each level is for defining a distinct operating point.

4. The method according to claim 2 or 3, **characterised in that** said control trajectory is a reference motor frequency trajectory (Fmot_ref).

5. The method according to claim 1, **characterised in that** it includes a step of defining a new operating point from a difference between the maximum variation (Δ*V_{dc_m}*) of the amplitude of the DC voltage measured for said operating point and the threshold value (Δ*V_{dc_ref}*)*.*

6. The method according to claim 5, **characterised in that** it includes a step of determining a high limit in terms of operating point of a compatibility of the combination of the input filter (1) with the variable speed drive (2).

7. The method according to claim 5 or 6, **characterised in that** it includes a step of determining a low limit in terms of operating point of a compatibility of the combination of the input filter with the variable speed drive.

8. A control system for verifying compatibility between an input filter (1) of the RLC type for filtering harmonics from an electric network and a variable speed drive (2), said variable speed drive (2) being connected to an electric power supply source via said input filter (1), said variable speed drive comprising as an input a rectifier stage (20) connected to said input filter (1), a DC power supply bus (22) connected to said rectifier stage and receiving a DC power supply voltage (Vdc), and as an output an inverter stage (21) connected to the DC power supply bus and controlled to provide a variable voltage to an electric motor (M), said system being **characterised in that** it is configured to apply several successive commands to define several operating points of the electric motor and **in that** it includes:
- For each operating point:
- Means for measuring the bus DC voltage,
- A module for comparing the maximum variation (Δ*V_{dc_m}*) of the amplitude of the DC voltage measured for said operating point with a threshold value (Δ*V_{dc_ref}*),
- A module for determining a new operating point as long as said maximum variation of the amplitude of the DC voltage is less than said threshold value,
- A module for determining an operating range comprising all the operating points for which said maximum variation (Δ*V_{dc_m}*) of the amplitude of the DC voltage is less than said threshold value (Δ*V_{dc_ref}*)*.*

9. The system according to claim 8, **characterised in that** it includes a module for applying a control trajectory for defining said operating points.

10. The system according to claim 9, **characterised in that** said control trajectory follows successive levels, wherein each level is for defining a distinct operating point.

11. The system according to claim 9 or 10, **characterised in that** said control trajectory is a reference motor frequency trajectory (Fmot_ref).

12. The system according to claim 8, **characterised in that** it includes a module for determining (B10) a new operating point from a difference between the maximum variation (Δ*V_{dc_m}*) of the amplitude of the DC voltage measured for said operating point and the threshold value (Δ*V_{dc_ref}*)*.*

13. The system according to claim 12, **characterised in that** it includes a module for determining a high limit in terms of operating point of a compatibility of the combination of the input filter (1) with the variable speed drive (2).

14. The system according to claim 12 or 13, **characterised in that** it includes a module for determining a low limit in terms of operating point of a compatibility of the combination of the input filter (1) with the variable speed drive (2).
